# NEW EUROPEAN PATENT SPECIFICATION

(11) **EP 0 428 779 B2**
(45) Date of publication and mention of the opposition decision: **06.10.1999**
(45) Mention of the grant of the patent: 19.06.1996
(21) Application number: 89121610.3
(22) Date of filing: 23.11.1989
(51) Int. Cl.: G06K 19/08

(54) **Unit for sensing magnetic codes**
Einheit zum Abtasten von magnetischen Kodes
Unité de détection de codes magnétiques

(43) Date of publication of application: 29.05.1991
(73) Proprietor: MANTEGAZZA ANTONIO ARTI GRAFICHE S.r.l., I-20021 Ospiate di Bollate (Milan) (IT)
(72) Inventor: Mantegazza, Antonio, Noverasco Di Opera (Milano) (IT)
(74) Representative: Modiano, Guido, Dr.-Ing.

(56) References cited:
- EP-A- 0 310 707
- DE-A- 2 245 028
- GB-A- 1 212 502
- GB-A- 1 534 859
- US-A- 4 114 029

## Description

The present invention relates to a method and a unit for sensing magnetic codes.

EP - A- 0310707 filed on December 20, 1987 discloses a magnetically detectable identification code which has a plurality of regions or bars with diversifiable magnetic intensity which are mutually divided by blank spaces.

Said regions have a different magnetic intensity due to magnetic oxide layers with different thicknesses in the direction which is perpendicular to the laying plane of these regions or possibly regions in which the density of the magnetic oxide is diversified, so as to have different magnetic intensities which can be sensed or detected by a magnetic read head which generates a signal, the duration whereof is a function of the width of the regions and of the blank spaces in the read direction and the amplitude whereof is a function of the intensity of the magnetic field generated by each of said regions.

Said identification code, which is applied inside documents, for example by applying it onto a strip of plastic material which is embedded into the document or can possibly be applied directly onto the document or product, has proven itself to be very valid, since it allows to have a wide range of readouts which are determined not just by the presence or not of the magnetic region but also by its intensity.

This kind of code has turned out to be further improvable so as to significantly increase its security in terms of not allowing its fraudulent reproduction.

US-A-4 114 029 discloses a record medium in tape form of permanent magnetic structure disposed on a support. The magnetic tape recording medium is arranged to have regions of the body of magnetically anisotropic material formed so that one overlies some others and the overlain regions form a conventional pattern having a permanent distinct magnetic property known as a "watermark". The conventional pattern of the overlain layer or watermark is formed during manufacture of the medium and it is considered to be permanent in that alteration would involve damage to the medium. The pattern may be detected and examined for determining whether or not a document containing the pattern is genuine or not.

The invention of US-A-4 114 029 resides in the provision of the overlying layer of magnetic material above the conventional watermark overlain layer, which overlying layer in particular is formed of material of a coercivity which is less than the coercivity of the overlain magnetic layer. In this manner, a protection signal is recorded on the overlying layer using a coercive force above the coercivity of the magnetic material of the overlying region but below the coercivity of the magnetic material of the watermark layer, thereby to leave unaffected the pattern or information of the watermark layer. The protection signal recorded on the overlying information layer is compared, in content and level, with a reference signal. If the overlying information layer is uniform than the read-out signal will agree with the reference signal. However if an attempt has been made to simulate a watermark in a fraudulent card by thickening parts of the overlying layer, of some other layer, then the thickened regions will distort the protection signal from the reference and the fraudulent card will be detected. After the protection signal has been verified as being authentic, the overlain watermark pattern is read and checked in a conventional manner, which reading and checking however does not change the character of the permanent watermark pattern.

DE-A-2 245 028 discloses a card comprising an identification code. The code comprises a plurality of magnetic regions A,B arranged in a line. Regions A have a "hard" magnetic coercive force whereas the regions B have a "soft" magnetic coercive force. The regions A which have a "hard" magnetic coercive force are understood to have a higher coercivity than the regions B which have a "soft" magnetic coercive force. The method of reading the code on the card involves the steps of:
a) writing with a weak current so that only the "soft" coercive regions B are magnetized with a given polarity;
b) reading the "soft" coercive regions B;
c) writing with a strong current so that all magnetic regions A,B are polarized in the same direction;
d) writing with a weak current so as to polarize the "soft" coercive regions B in the opposite direction to the direction in step c thereby "deleting" the magnetic regions B; and
e) reading the "hard" coercive regions A.

According to the invention there are provided a method for sensing an identification code as defined in the appended claim 1, and a unit for sensing an identification code as defined in the appended claim 2.

The characteristics and advantages of the invention will become apparent from the detailed description of a preferred but not exclusive embodiment of a unit for sensing magnetic codes, illustrated only by way of non-limitative example in the accompanying drawings, wherein:
figure 1 is a schematic perspective view of a practical representation of the identification code, in which the regions with greater magnetic intensity are indicated by a greater thickness and the different coercivity of the magnetic material which constitutes said regions is schematically indicated by sloping lines and dots;
figure 2 is a schematic plan view of the code regions of fig. 1 pointing out the different coercivity thereof;
figure 3 is a plan view, with orientation indication, of the code regions after a first orientation step, and the corresponding electrical signal as generated by the magnetic read head;
figure 4 is a view of the code regions after a second different orientation step, and the corresponding electrical signal as generated by the magnetic head;
figure 5 is a view of the orientation of all the code regions after code readout has been performed;
figure 6 is a schematic view of the magnetic code sensing unit.

With reference to the above figures, the identification code for documents and the like comprises a plurality of magnetic regions, generally indicated by the reference numeral 1, which are mutually spaced apart and are obtained by deposition for example of magnetic iron oxide.

Said regions 1 in practice constitute a bar code, since the various magnetic regions are separated by blank spaces 2.

Advantageously, the regions 1 have a different magnetic intensity which is obtained according to the characteristics illustrated in the above mentioned European patent application.

The peculiarity of the code resides in that at least one part of said regions 1, indicated at 1a, has a magnetic coercivity which differs with respect to the remaining regions, indicated at 1b.

As a specific example, the regions 1a may have a high magnetic coercivity, for example 4000 Oe, whereas the regions 1b may have a low magnetic coercivity, for example 350 Oe.

This different coercivity is obtained by using different ranges of products, for example of the kind commercially known by the trade-name Bayferrox; it is also possible to obtain a plurality of groups of regions with different magnetic coercivity, further increasing the degree of security for magnetic sensing.

With the above described specific example, it is possible to perform two different sensings of the same plurality of regions by varying the magnetic field which orientates the regions.

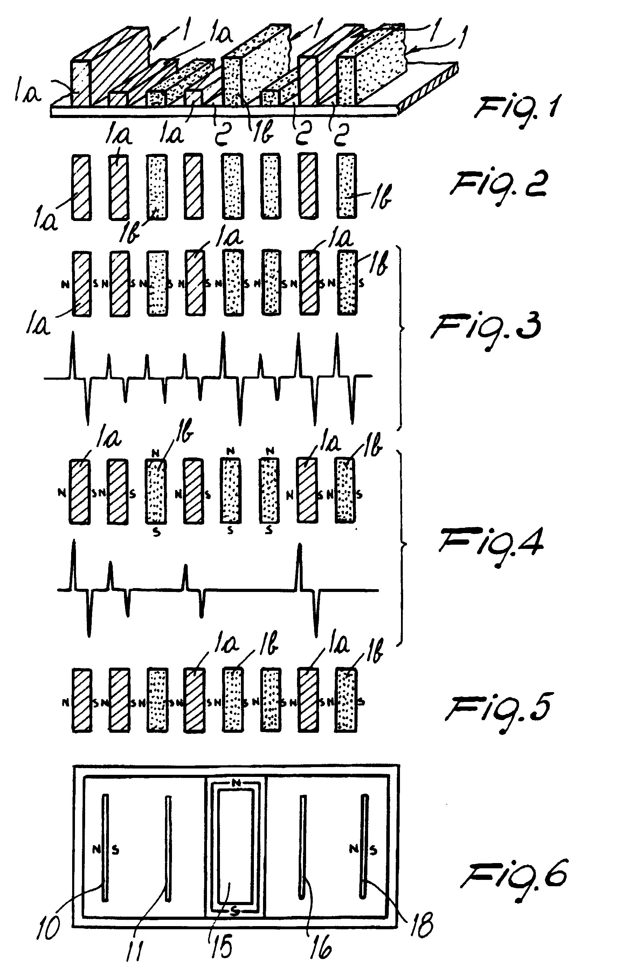

Again with reference to the above described specific example, in which two different groups of regions with two different coercivities are provided, it is possible to perform a first readout by applying a first magnetic field for orientating all the regions 1; thus, for example, as illustrated in figure 3, it is possible to orientate the magnetic regions with a N-S, N-S, ..., N-S arrangement along the direction in which the code is read or sensed, which is advantageously perpendicular to the extension of said regions, i.e. in the direction in which the various regions are side-by-side.

Then, by means of a magnetic sensing head, the code is read and an electrical signal is obtained, which has two pulses at each magnetic region, the intensity of these pulses corresponding to the magnetic intensity of said region.

Once this first readout has been performed, a second magnetic field is applied having such an intensity as to modify the orientation exclusively of the regions which have a low coercivity or in any case such a coercivity as to be affected by the applied magnetic field. In this manner, as illustrated in figure 4, some regions (with higher coercivity) preserve the North-South orientation in the readout direction, while other regions, i.e. those with lower coercivity, have a North-South orientation which is perpendicular to the read direction; in these conditions, the electrical signal obtained in the subsequent sensing step, has pulses only at the regions with North-South orientation in the readout direction, providing a readout which is different from the one performed earlier though it is done on the same plurality of regions.

In order to perform said readouts it is possible to use a magnetic sensing unit as illustrated in figure 6 and comprising an entry magnet, indicated at 10, which generates a magnetic field capable of orientating all the regions along the North-South direction in the readout direction; a first read head 11 is arranged to the side of the entry magnet 10 and magnetically reads all the regions, generating an electrical signal which is a function of the position of such regions and of their intensity. After the first read head, the unit is provided with a de-orientation magnet, indicated at 15, which generates a magnetic field according to a different direction with respect to the direction generated by the entry magnet and along a perpendicular direction. The magnetic intensity of the de-orientation magnet 15 is such as to vary the magnetic orientation exclusively of the part of regions which has low coercivity, whereas the regions with high coercivity are in practice not influenced by the de-orientation magnet.

A second magnetic read head, indicated at 16, is provided next to the de-orientation magnet, downstream with respect to the readout direction of the document, and detects exclusively the regions which are not de-orientated, i.e. the regions which still have the North-South magnetic orientation in the read direction, while in practice it does not sense the regions in which the orientation has been varied and arranged perpendicular to the read direction.

An exit magnet, indicated at 18, is arranged next to the second read head and has the function of re-orientating all the regions, i.e. both with low and high coercivity, so that the document is ready for a subsequent readout, and so that if it is examined with a magnetic lens it does not allow to point out regions with a different magnetic orientation.

With this code, i.e. by virtue of the presence of magnetic regions with different coercivity, it is possible to read in practice a code within the code, i.e. to perform two different readouts, both of which can be decoded for authentic documents, thus constituting a further degree of anti-forgery security.

From what has been described above it can thus be seen that the invention provides two different sensing levels and consequently two different readouts which can be individually detected and decoded, ensure authenticity in the most absolute manner.

The invention thus conceived is susceptible to numerous modifications and variations, all of which are within the scope of the inventive concept. In particular, since the code regions may have more than two different coercivities, the sensing unit may present more than one de-orientation magnet.

In practice, the materials employed, as well as the dimensions and contingent shapes, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for sensing an identification code defined by a plurality of magnetic regions (1) arranged in a line and mutually separated by blank spaces i.e. non-magnetic (2) and including at least one first part (1a) of said regions having a magnetic coercivity which differs from that of the remaining second part of said regions (1b), the different coercivities of said first and second parts being such that upon application of at least two different magnetic fields to said regions, the regions of said first and second parts respectively, have different magnetic orientations, said regions thereby being able to generate at least two different electrical signal readouts from the same said plurality of regions, the method comprising the following sequential steps of:
- generating a magnetic field for orientating all of the plurality of magnetic regions (1) in the same first direction;
- reading the code by generating an electrical signal having pulses the position whereof is a function of the width of each of the magnetic regions (1) and the amplitude whereof is a function of the intensity of the magnetic field generated by each magnetic region (1);
- varying the orientation in a direction substantially perpendicular to said first direction selectively only of said one part of the magnetic regions which has the lower coercivity; and
- reading the code by generating an electrical signal having pulses the position whereof is a function of the width of only each of the magnetic regions of said other part which has the higher coercivity.

2. A unit for sensing an identification code defined by a plurality of magnetic regions (1) arranged in a line and mutually separated by blank spaces i.e. non-magnetic areas (2) and including at least one first part (1a) of said plurality of regions having a magnetic coercivity which differs from that of the remaining second part (1b) of said regions, the different coercivities of said first and second parts being such that upon application of at least two different magnetic fields to said regions, the regions of said first and second parts respectively, have different magnetic orientations, said regions thereby being able to generate at least two different electrical signal readouts from the same said plurality of regions, the unit comprising: an entry magnet (10) which generates a magnetic field adapted to orientate all of the plurality of magnetic regions (1) defining the code in the same direction; a first magnetic read head (11) which is arranged downstream in the direction of travel of the code in the unit with respect to said entry magnet which generates an electrical signal having pulses the position whereof is a function of the width of the magnetic regions (1) and of the said blank spaces (2) interposed therebetween in the read direction, and the amplitude whereof is a function of the intensity of the magnetic field generated by each magnetic region (1); a de-orientation magnet (15) which is arranged downstream in the direction of travel of the code in the unit with respect to said first magnetic read head and which varies the orientation only of the one said part of said plurality of magnetic regions which has the lower coercivity, and said de-orientation magnet (15) generates a magnetic field in a direction which is substantially perpendicular to the field generated by said entry magnet (10); a second read head (16), which is arranged downstream in the direction of travel of the code in the unit with respect to said de-orientation magnet and which generates an electrical signal having pulses the position whereof is a function of the width of only the other said part of said plurality of magnetic regions which has the higher coercivity; and an exit magnet (18) which is arranged downstream in the direction of travel of the code in the unit with respect to said second read head and which generates a magnetic field adapted for re-orientating all of the regions of said plurality of magnetic regions in the same direction.

## Patentansprüche

1. Verfahren zur Erfassung eines Kennungskodes, welcher durch viele Magnetbereiche (1) definiert ist, die in einer Zeile angeordnet und gegenseitig durch Zwischenräume, d.h. unmagnetische Bereiche (2), beabstandet sind und die mindestens einen ersten Teil (1a) mit Magnetbereichen enthalten, deren magnetische Koerzitivkraft sich von der des restlichen zweiten Teils der Bereiche (1b) unterscheidet, wobei die unterschiedlichen Koerzitivkräfte des ersten und zweiten Teils derart sind, dass sich beim Anlegen wenigstens zweier unterschiedlicher Magnetfelder an die Bereiche jeweils unterschiedliche magnetische Ausrichtungen der den ersten und zweiten Teil bildenden Bereiche einstellen, wodurch die Bereiche zur Erzeugung von wenigstens zwei verschiedenen elektrischen Signalablesungen aus der gleichen Vielzahl der Bereiche fähig sind, und das Verfahren folgende sequentielle Schritte aufweist:
- Erzeugung eines Magnetfelds zur Ausrichtung aller der vielen Magnetbereiche (1) in der selben ersten Richtung;
- Lesen des Kodes durch Erzeugen eines elektrischen Signals, das Impulse hat, deren Position eine Funktion der Breite der jeweiligen Magnetbereiche (1) und deren Amplitude eine Funktion der Stärke des durch jeden Magnetbereich (1) erzeugten Magnetfelds ist;
- Selektive Veränderung der Magnetfeldausrichtung lediglich des einen Teils der Magnetbereiche, der die geringere Koerzitivkraft hat, in einer zur ersten Richtung im wesentlichen senkrecht stehenden Richtung; und
- Lesen des Kodes durch Erzeugung eines elektrischen Signals, das Impulse hat, deren Position eine Funktion der Breite lediglich der Magnetbereiche des anderen Teils mit der höheren Koerzitivkraft ist.

2. Einheit zur Erfassung eines Kennungskodes, der durch mehrere magnetische Bereiche (1) definiert ist, die in einer Zeile angeordnet und gegenseitig durch Zwischenräume, d.h. unmagnetische Bereiche (2), beabstandet sind und die in der Vielzahl der Bereiche wenigstens einen ersten Teil (1a) enthalten, dessen magnetische Koerzitivkraft sich von der des restlichen zweiten Teils (1b) der Bereiche unterscheidet, wobei die unterschiedlichen Koerzitivkräfte des ersten und zweiten Teils derart sind, dass sich beim Anlegen wenigstens zweier unterschiedlicher Magnetfelder an die Bereiche jeweils unterschiedliche magnetische Ausrichtungen der den ersten und zweiten Teil bildenden Bereiche einstellen, wodurch die Bereiche zur Erzeugung von wenigstens zwei verschiedenen elektrischen Signalablesungen aus der gleichen Vielzahl der Bereiche fähig sind, und die Einheit aufweist: einen Eintrittsmagneten (10), der ein Magnetfeld erzeugt, welches zur Ausrichtung aller den Kode definierenden Magnetbereiche (1) in der selben Richtung eingerichtet ist; einen ersten magnetischen Lesekopf (11), der in der Einheit, bezogen auf den Eintrittsmagneten stromabwärts in Richtung der Bewegung des Kodes angeordnet ist und ein elektrisches Signal aus Impulsen erzeugt, deren Position eine Funktion der Breite der magnetischen Bereiche (1) und der in Leserichtung dazwischen liegenden Zwischenräume (2) ist, und deren Amplitude eine Funktion der Stärke des durch jeden Magnetbereich (1) erzeugten Magnetfelds ist; einen Desorientierungsmagneten (15), der in der Einheit, bezogen auf den ersten magnetischen Lesekopf stromabwärts in Richtung der Bewegung des Kodes angeordnet ist und die Ausrichtung nur desjenigen Teils der Vielzahl der Magnetbereiche verändert, der die geringere Koerzitivkraft hat und der ein Magnetfeld in einer Richtung erzeugt, die im wesentlichen senkrecht auf dem vom Eintrittsmagneten (10) erzeugten Magnetfeld steht; einen zweiten Lesekopf (16), der in der Einheit, bezogen auf den Desorientierungsmagneten, stromabwärts in Richtung der Kodebewegung angeordnet ist und der ein elektrisches Signal aus Impulsen erzeugt, deren Position eine Funktion der Breite lediglich des anderen Teils der Magnetbereiche mit der höheren Koerzitivkraft ist; und einen Austrittsmagneten (18), der in der Einheit, bezogen auf den zweiten Lesekopf, stromabwärts in Richtung der Kodebewegung angeordnet ist und ein Magnetfeld erzeugt, das zur Neuausrichtung aller Bereiche der vielen Magnetbereiche in der selben Richtung eingerichtet ist.

## Revendications

1. Procédé pour détecter un code d'identification, défini par une pluralité de zones magnétiques (1) agencées dans une ligne et séparées mutuellement par des espaces vierges c'est-à-dire non-magnétiques (2) et comportant au moins une première partie (1a) desdites zones ayant une coercitivité magnétique qui est différente de celle de la seconde partie restante desdites zones (1b), les coercitivités différentes de ladite première partie et de ladite seconde partie étant telles que lors de l'application d'au moins deux champs magnétiques différents auxdites zones, les zones desdites première et seconde parties respectivement ont des orientations magnétiques différentes, lesdites zones étant ainsi capables d'engendrer au moins deux signaux électriques différents extraits de la même dite pluralité de zones, le procédé comportant les étapes séquentielles suivantes consistant à :
- engendrer un champ magnétique pour orienter dans la même première direction toutes les zones de la pluralité de zones magnétiques (1) ;
- lire le code en engendrant un signal électrique ayant des impulsions dont la position est une fonction de la largeur de chacune des zones magnétiques (1) et dont l'amplitude est une fonction de l'intensité du champ magnétique engendré par chaque zone magnétique (1) ;
- faire varier l'orientation dans une direction sensiblement perpendiculaire à ladite première direction de manière sélective seulement de ladite partie des zones magnétiques qui a la coercitivité plus faible, et
- lire le code en engendrant un signal électrique ayant des impulsions dont la position est une fonction de la largeur de chacune des zones magnétiques de ladite autre partie qui a la coercitivité plus élevée.

2. Unité de détection d'un code d'identification défini par une pluralité de zones magnétiques (1) agencées dans une ligne et séparées mutuellement par des espaces vierges c'est-à-dire des zones non-magnétiques (2) et comportant au moins une première partie (1a) de ladite pluralité de zones ayant une coercitivité magnétique qui est différente de celle de la seconde partie restante (1b) desdites zones, les coercitivités différentes de ladite première partie et de ladite seconde partie étant telles que lors de l'application d'au moins deux champs magnétiques différents auxdites zones, les zones desdites première et seconde parties respectivement ont des orientations magnétiques différentes, lesdites zones étant ainsi capables d'engendrer au moins deux signaux électriques différents extraits de la même dite pluralité de zones, l'unité comportant : un aimant d'entrée (10) qui engendre un champ magnétique adapté pour orienter dans la même direction, toutes les zones de la pluralité de zones magnétiques (1) définissant le code; une première tête de lecture magnétique (11) qui est agencée en aval, dans la direction du trajet du code dans l'unité, par rapport audit aimant d'entrée, qui engendre un signal électrique ayant des impulsions dont la position est fonction de la largeur dans la direction de lecture des zones magnétiques (1) et desdits espaces vierges (2) interposés entre celles-ci, et dont l'amplitude est une fonction de l'intensité du champ magnétique créé par chaque zone magnétique (1); un aimant de suppression d'orientation (15) qui est agencé en aval, dans la direction du trajet du code dans l'unité, par rapport à ladite première tête de lecture magnétique et qui fait varier l'orientation uniquement de ladite partie de ladite pluralité de zones magnétiques qui a la coercitivité plus faible et ledit aimant de suppression d'orientation (15) engendre un champ magnétique dans une direction qui est sensiblement perpendiculaire au champ engendré par ledit aimant d'entrée (10); une seconde tête de lecture (16), qui est agencée en aval, dans la direction du trajet du code dans l'unité, par rapport audit aimant de suppression d'orientation et qui engendre un signal électrique ayant des impulsions dont la position est une fonction de la largeur de seulement l'autre dite partie de ladite pluralité de zones magnétiques qui a la coercitivité plus élevée; et un aimant de sortie (18) qui est agencé en aval, dans la direction du trajet du code dans l'unité, par rapport à ladite seconde tête de lecture et qui engendre un champ magnétique adapté pour réorienter dans la même direction toutes les zones de ladite pluralité de zones magnétiques.
